## Europäisches Patentamt
## European Patent Office
## Office européen des brevets

(19)

(11) Veröffentlichungsnummer: **0 156 136**
**B1**

(12) # EUROPÄISCHE PATENTSCHRIFT

(45) Veröffentlichungstag der Patentschrift:
10.05.89

(21) Anmeldenummer: 85101404.3

(22) Anmeldetag: 09.02.85

(51) Int. Cl.⁴: **F 16 J 15/32**

(54) **Hochdruckdichtung.**

(30) Priorität: 15.02.84 DE 3405351

(43) Veröffentlichungstag der Anmeldung:
02.10.85 Patentblatt 85/40

(45) Bekanntmachung des Hinweises auf die Patenterteilung:
10.05.89 Patentblatt 89/19

(84) Benannte Vertragsstaaten:
AT BE CH DE FR GB IT LI LU NL SE

(56) Entgegenhaltungen:
DE-A-1 948 432
DE-A-2 261 414
DE-A-3 218 427
DE-B-2 227 042

(73) Patentinhaber: Bran + Lübbe GmbH, Werkstrasse 4, D-2000 Norderstedt (DE)

(72) Erfinder: Zöllner, J. Peter, Ave. St. Sebastien 7B, D-2056 Glinde (DE)

(74) Vertreter: Meyer, Ludgerus, Patentanwälte Meyer, Stach, Vonnemann Jungfernstieg 38, D-2000 Hamburg 36 (DE)

LIBER, STOCKHOLM 1989

## Beschreibung

Die Erfindung betrifft eine Hochdruckdichtung für einen axial verschiebbaren und/oder verdrehbaren Kolben, eine Kolbenstange oder Welle, mit mindestens einem Dichtungs- oder Führungsring aus unter Druck elastisch oder plastisch verformbarem Material und einem an diesem anliegenden Stützring der aus sich unter den Betriebsbedingungen im wesentlichen nicht verformendem Hartmaterial besteht.

Bekannte Hochdruckdichtungen dieser Art (DE-B-2 227 042) weisen einen starr gelagerten Stützring aus unter Betriebsbedingungen praktisch nicht verformbarem Material auf, der eine Dichtung aus unter Druck elastisch oder plastisch verformbaren Werkstoffen wie Elastomeren, PTFE-getränkten Kunststoff- oder Mineralfasergeweben und/oder-compounds oder ähnlichem in Form eines Nutringes, einer Dachmanschette, einer Vierkantschnur, eines Abstreifringes oder anderem abstützt und kammert. Ein gleichzeitig mit oder anstelle der Dichtung vorgesehener Führungsring aus den genannten unter Druck verformbaren Werkstoffen dient zur Abstützung der Dichtung und/oder zur Führung von Plungerkolben, Kolbenstangen, Kolben oder Wellen und dergleichen und muß ebenfalls abgestützt und gekammert werden. Der Stützring wird daher auf der druckabgewandten Seite der Dichtung starr gelagert vorgesehen. Zwischen den relativ zueinander bewegten Teilen verbleibt ein Ringspalt. Wird dieser so groß gewählt, daß seitliches Anlaufen der Teile gegeneinander und die daraus resultierende Zerstörung der Gleitflächen vermieden wird, wird die verformbare Dichtung bzw. der Führungsring unter dem Betriebsdruck in den Ringspalt extrudiert und die Dichtung, je nach Betriebsbedingungen schneller oder langsamer, zerstört. Wird andererseits der Ringspalt so klein gewählt, daß ein Extrudieren der verformbaren Dichtung bzw. des Führungsringes in den Ringspalt nicht möglich ist, kommt es durch die unvermeidlichen radialen Bahnabweichungen zum Anlaufen der relativ zueinander bewegten, gegeneinander abzudichtenden Teile und zur Zerstörung der Gleitflächen.

Aufgabe der Erfindung ist es nun, eine unaufwendige Hochdruckdichtung der eingangs genannten Art zu schaffen, die eine verlängerte verschleißfreie Lebensdauer aufweist.

Zur Lösung dieser Aufgabe ist die Vorrichtung der eingangs genannten Art erfindungsgemäß mit den im Kennzeichnungsteil des Anspruchs 1 angegebenen Merkmalen ausgestattet.

Der Stützring ist erfindungsgemäß in einer Ringnut des Dichtungs- oder Führungsringes gelagert und unter dessen begrenzter Verformung radial elastisch verschiebbar. Der Ringspalt zwischen dem Stützring und dem diesem gegenüber bewegten Teil kann dadurch so klein gewählt werden, daß ein Extrudieren des Dichtungs- oder Führungsringes in den Ringspalt ausgeschlossen wird. Andererseits ist eine Zerstörung der Gleitflächen von Stützring und Kolben, Kolbenstange oder Welle durch seitliches Anlaufen ausgeschlossen, da der Stützring nicht starr gelagert ist und radial ausweichen kann. Bei geeigneten Werkstoffkombinationen von Dichtungs- oder Führungsring, Stützring- und Oberfläche des relativ zu diesem bewegten Teils kommt es durch geringfügige konzentrische radiale Verformung des Stützringes unter Hochdruck im Betrieb zu einer Kalibrierung des Stützringes durch die mit diesem zusammenwirkende Gleitfläche, so daß der Ringspalt praktisch verschwindet.

Der Stützring kann mit einem geringen Radialspiel gegenüber dem Ringsteg des Dichtungs- oder Führungsringes ausgeführt werden, so daß fertigungs- und einbaubedingte Fluchtungsfehler zwischen Stützring und Kolben, Kolbenstange oder Welle ausgeglichen werden, ehe der Stützring unter Betriebsdruck vom Ringsteg des Dichtungs- oder Führungsrings umschlossen wird.

Gegenstand der Erfindung ist weiterhin ein Dichtungs- oder Führungsring aus unter Druck verformbarem Material für eine Hochdruckdichtung nach Anspruch 1 mit den im Anspruch 5 genannten Merkmalen.

Im folgenden werden bevorzugte Ausführungsformen der Hochdruckdichtung an Hand der beigefügten Zeichnungen weiter erläutert.

Es zeigen:

| | |
|---|---|
| Fig. 1 | eine längsgeschnittene Hochdruckdichtung für einen Plungerkolben; |
| Fig. 1a und 1b | Vergrößerungen des in Fig. 1 eingekreisten Bereichs; |
| Fig. 2 | eine längsgeschnittene abgewandelte Hochdruckdichtung für einen Plungerkolben; |
| Fig. 3 | eine längsgeschnittene Hochdruckdichtung für einen Kolben |
| Fig. 3a und 3b | Vergrößerungen des in Fig. 3 eingekreisten Bereichs und |
| Fig. 4 | eine längsgeschnittene abgewandelte Hochdruckdichtung für einen Kolben. |

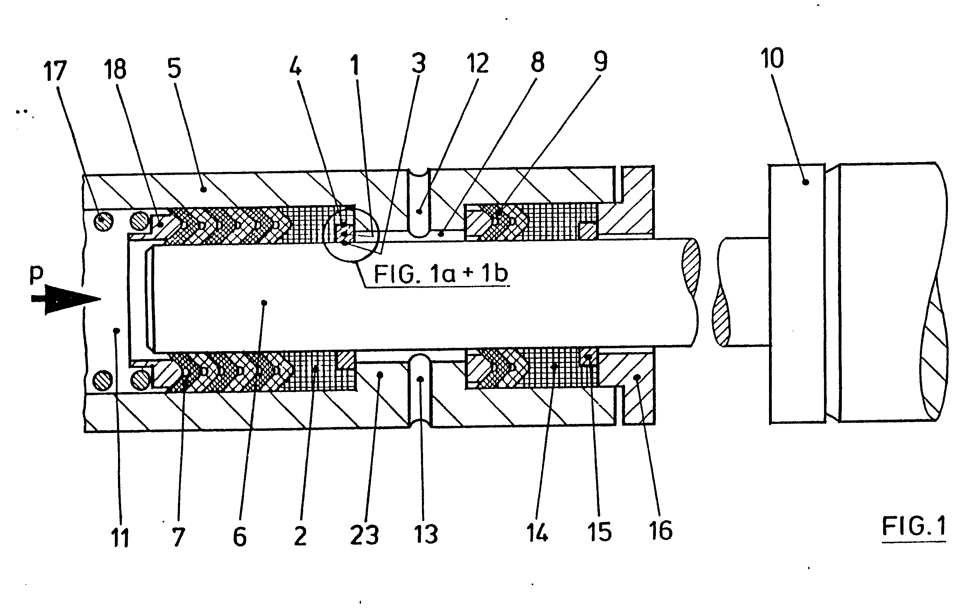

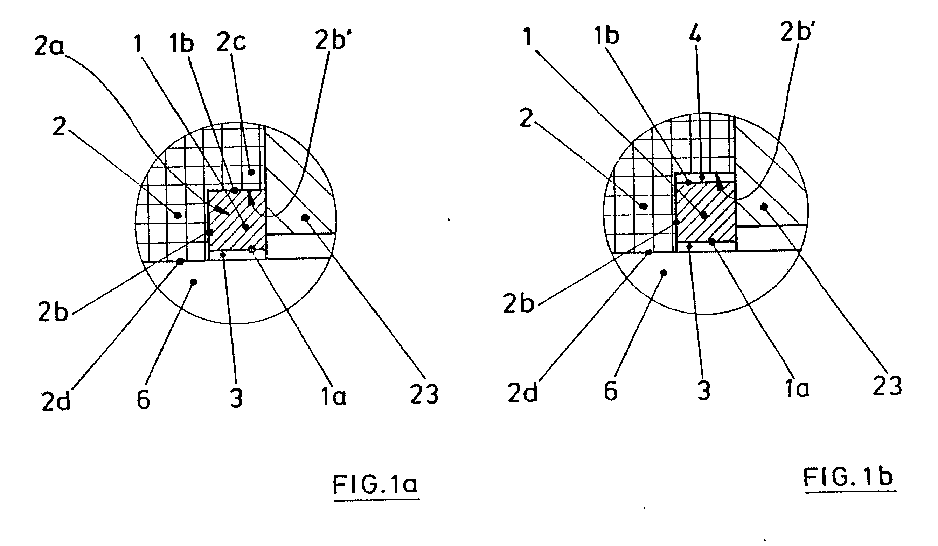

Die in Fig. 1, 1a und 1b im Axialschnitt gezeigte Hochdruckdichtung für einen Plungerkolben 6 umfaßt einen Führungsring 2, der an seinem mit dem Stützring 1 zusammenwirkenden Ende eine zu diesem und zum abzudichtenden Ringspalt 3 hin offene Ringnut 2a mit einer im wesentlichen radialen Ringstufenfläche 2b und einem diese auf der vom Ringspalt 5 abgewandten Seite begrenzenden, axial vorstehenden Ringsteg 2c aufweist.

Der Führungsring 2 besteht aus gefülltem PTFE. In der Ringnut 2a liegt der Stützring 1 aus Sintermetall (DEVA-Metall) gegen deren Ringstufenfläche 2b an. Seine dem Ringspalt 3 zugewandte Umfangsfläche 1a tritt relativ zu der vom Ringsteg 2c entfernteren Umfangsfläche 2d des Führungsringes 2 bei koaxialer Ausrichtung etwas zurück.

Die dem Ringspalt 3 zugewandte Umfangsfläche 2b' des Ringsteges 2c entspricht im Durchmesser der vom Ringspalt 3 abgewandten Umfangsfläche 1b des Stützringes 1 (Fig. 1a), sie kann aber auch vor dem Einbau um eine vorbestimmte geringe Strecke größer sein (Radialspiel 4 in Fig. 1b), liegt dann jedoch im Betriebszustand unter elastischer und/oder plastischer Verformung gegen diese an. Der Stützring 1 ist so unter begrenzter Verformung des Ringsteges 2c radial elastisch verschiebbar gelagert.

Der Führungsring 2 weist in seiner von der Ringnut 2a abgewandten axialen Stirnfläche eine im Querschnitt im wesentlichen V-förmige Nut zur Aufnahme einer Dachmanschettendichtung 7 auf.

Die so aufgebaute Hochdruckdichtung ist in einer Plungerbuchse 5 aufgenommen und dichtet gegen den in ihr verschiebbaren Plungerkolben 6 ab. Ein den Plungerkolben 6 umgebender Andruckring 18 wird durch eine Federvorrichtung 17 in Richtung auf die Hochdruckdichtung gedrängt und preßt diese gegen einen radial einwärts vortretenden Sitz 23 der Plungerbuchse 5, der radial so weit in Richtung zum Plungerkolben 6 vortritt, daß die druckabgewandte Seitenfläche des Stützringes 1 daran z. T. anliegt. Zwischen dem Sitz 23 und dem Plungerkolben 6 liegt eine ringförmige Wartungskammer 8, die zum Schmieren und/oder Kühlen des Plungerkolbens 6 mit einem Zuführkanal 12 und einem Abführkanal 13 in Form radialer Bohrungen versehen ist. Auf der druckabgewandten Seite des Sitzes 23 ist eine zweite Hochdruckdichtung vorgesehen, die eine aus Dachmanschetten gebildete Wartungskammerdichtung 9, einen Führungsring 14 und einen Stützring 15 umfaßt und durch ein in der Plungerbuchse 5 festlegbares Halterungselement 16 gegen den Sitz 23 vorgespannt wird. Führungsring 14 bzw. Stützring 15 entsprechen dem bereits beschriebenen Führungsring 2 bzw. Stützring 1, beide Hochdruckdichtungen weisen in die selbe Richtung.

Der Plungerkolben 6 ist über eine Kupplung 10 mit dem Kreuzkopf eines herkömmlichen Kurbeltriebes (nicht dargestellt) verbunden und in einer durch die Hochdruckdichtung. abgeschlossenen Förderkammer 11 reziprozierend verschiebbar. Beim Förderhub (Bewegung nach links in Fig. 1) erzeugt der Plungerkolben 6 in der Förderkammer 11 einen Förderdruck, der durch den Pfeil P angedeutet ist. Unter der Wirkung dieses Druckes wird die von der Federvorrichtung 17 und dem Andruckring 18 gegen den Sitz 23 gedrängte Hochdruckdichtung weiter komprimiert. Die im Querschnitt V-förmige Nut des Führungsringes 2 verhindert eine übermäßige Verformung der Dachmanschettendichtung 7. Der Führungsring 2 kann auch unter Hochdruck nicht durch den nur sehr kleinen Ringspalt 3 zwischen dem Stützring 1 und dem Plungerkolben 6 extrudiert werden und preßt den Stützring 1 gegen den Sitz 23 der Plungerbuchse 5. Durch dieses Anpressen wird ein Extrudieren des Führungsringes 2 zwischen dem Stützring 1 und dem Sitz 23 hindurch ausgeschlossen; durch den entstehenden radial einwärts gerichteten Druck des Führungsringes 2 auf den Außenumfang des Stützringes 1 wird dieser allenfalls minimal radial komprimiert. Dabei kommt es jedoch nicht zu Anlaufbeschädigungen der Oberfläche des Plungerkolbens 6 oder der Innenumfangsfläche des Stützringes 1, da der Stützring 1 unter Verformung des Führungsringes 2 radial ausweichen kann und die zulässigen Flächenpressungswerte selbst bei Berührung der Gleitflächen nicht überschritten werden.

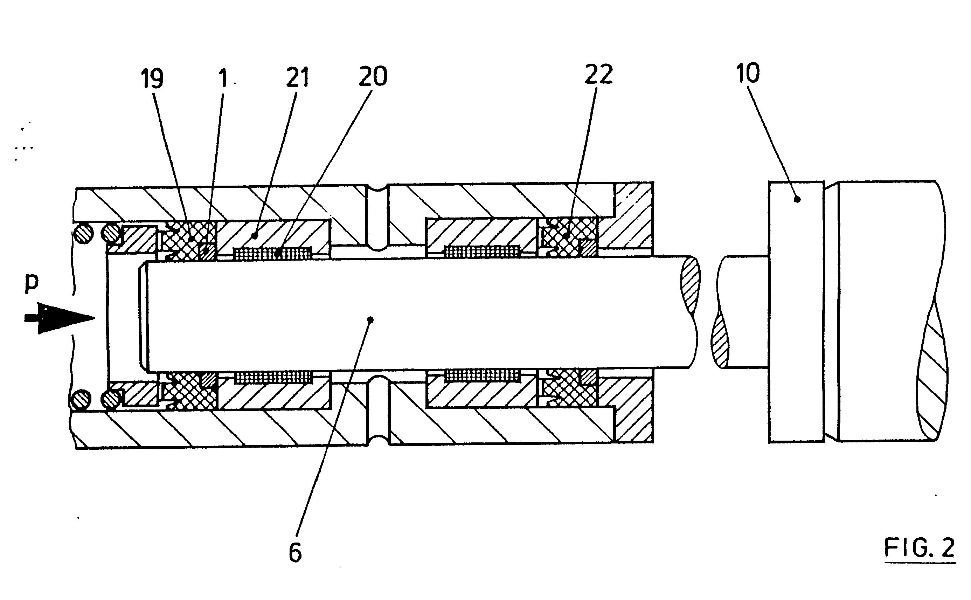

Eine abgewandelte Hochdruckdichtung für einen Plungerkolben 6 ist in Fig. 2 gezeigt, wobei mit den Fig. 1, 1a und 1b übereinstimmende Teile nicht beschrieben werden und zum Teil in der Figur nicht bezeichnet sind. Bei dieser abgewandelten Hochdruckdichtung ist ein dem bereits beschriebenen im wesentlichen entsprechender Stützring 1 in einem Dichtungsring 19 in der ebenfalls bereits beschriebenen Weise radial verschiebbar gelagert. Der Dichtungsring 19 weist an seiner von der den Stützring 1 aufnehmenden Ringnut abgewandten axialen Stirnfläche 2 radiale Dichtlippen auf, die gegenüber der Plungerbuchsenwandung bzw. dem Plungerkolben 6 eine der bereits beschriebenen Dachmanschettendichtung entsprechende Dichtwirkung entfalten. Dichtungsring 19 und Stützring 1 werden bei dieser Ausführungsform nicht direkt gegen den Sitz der Plungerbuchse, sondern stattdessen gegen einen starren Haltering 21 aus unter Betriebsbedingungen nicht verformbarem Material gepreßt, der gegenüber dem Plungerkolben 6 ein so großes Radialspiel aufweist, daß dieser am Haltering 21 nicht anlaufen kann. Ein Führungsring 20 aus elastisch und/oder plastisch verformbarem Material ist zur Führung des Plungerkolbens 6 in der Innenumfangsfläche des Halteringes 21 eingelassen. Da eine Hochdruckdichtung aus Dichtungsring 19 und Stützring 1 druckseitig von dem Führungsring 20 angeordnet ist, muß dieser nicht, wie bei der an Hand der Fig. 1 beschriebenen Ausführungsform, gegen Deformation unter Druck gesichert werden. Auf der druckabgewandten Seite des Sitzes sind, wiederum analog der Anordnung in Fig. 1, ein Dichtungsring 22 mit radialen Dichtlippen und ein diesen abstützender Stützring vorgesehen, die durch ein Halterungselement gegen einen sich am Sitz abstützenden Haltering mit in dessen Innenumfangsfläche eingelassenem Führungsring vorgespannt sind.

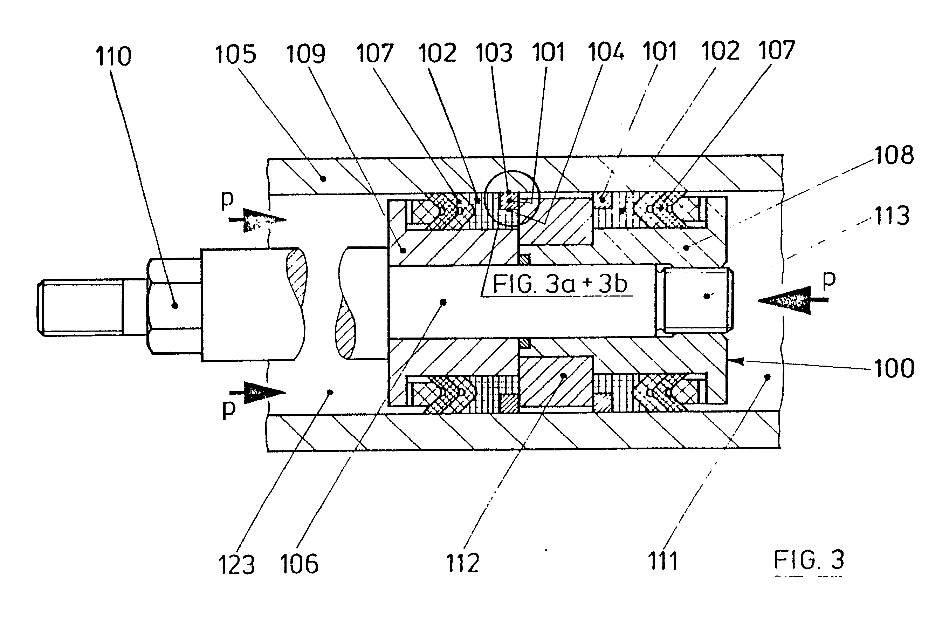

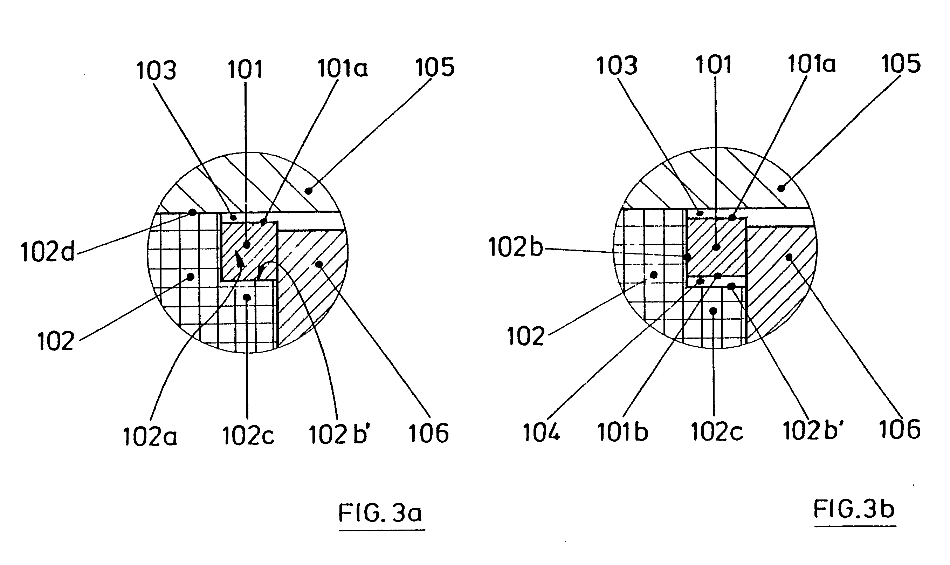

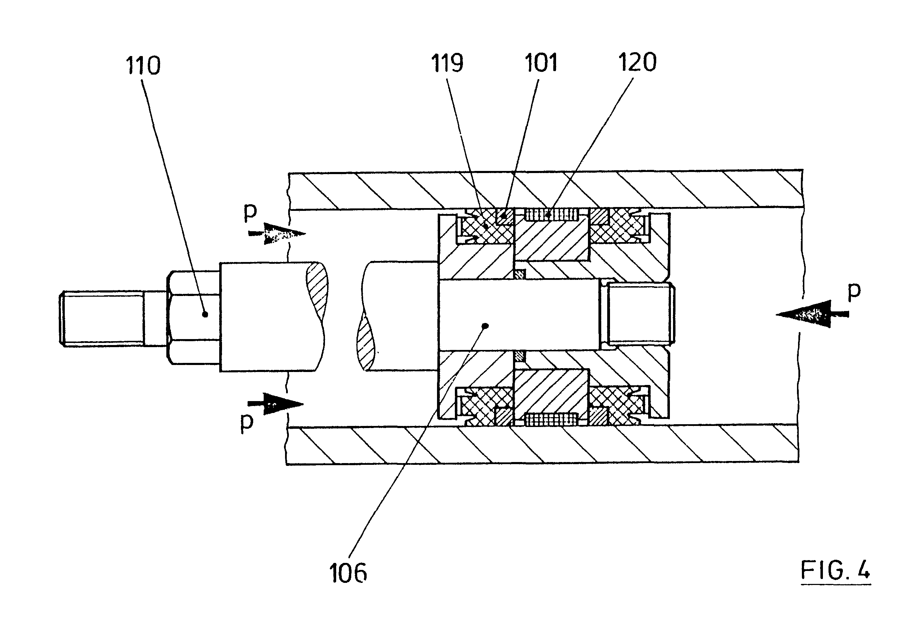

Während die bisher beschriebenen Ausführungsbeispiele Hochdruckdichtungen betreffen, die ein in ihnen bewegliches Teil dichtend umschließen, wobei die Hochdruckdichtung an einem selbst nicht bewegten Gehäuseteil angeordnet ist, kann sie stattdessen auch an dem bewegten Teil selbst angeordnet sein, wie die im folgenden an Hand der Fig. 3 und 4 beschriebenen Ausführungsbeispiele zeigen.

Fig. 3 zeigt einen in einem Zylinder 105 durch eine Kolbenstange 106 reziprozierend verschiebbaren Kolben 100, der gegen die Innenwand des Zylinders 105, an der er entlanggleitet, durch eine erfindungsgemäße Hochdruckdichtung abgedichtet ist. Die Hochdruckdichtung umfaßt einen Stützring 101, der in einer Ringnut 102a (vgl. Fig. 3a) eines Kolbenführungsringes 102 angeordnet ist. Die Ringnut 102a ist zum mit dem Stützring 101 zusammenwirkenden Ende des Kolbenführungsringes 102 sowie zum abzudichtenden Ringspalt 103 hin offen und weist eine im wesentlichen radiale Ringstufenfläche 102b und einen diese auf der von Ringspalt 103 abgewandten Seite begrenzenden, axial vorstehenden Ringsteg 102c auf. Wie bei den oben beschriebenen Ausführungsformen tritt auch hier die dem Ringspalt 103 zugewandte Umfangsfläche 101a des Stützringes 101 relativ zu der vom Ringsteg 102c entfernten Umfangsfläche 102d des Führungsringes 102 bei koaxialer Ausrichtung etwas zurück. Wie die Fig. 3a und 3b zeigen, entspricht die dem Ringspalt 103 zugewandte Umfangsfläche 102b' des Ringsteges 102c im Durchmesser der vom Ringspalt 103 abgewandten Umfangsfläche 101b des Stützringes 101 oder ist vor dessen Einbau um eine vorbestimmte geringe Strecke, nämlich um das Radialspiel 104, größer, liegt jedoch in jedem Fall im Betriebszustand, gegebenenfalls unter elastischer und/oder plastischer Verformung gegen die Umfangsfläche 101b des Stützringes an. Auch bei dieser Ausführungsform ist der in der Ringnut 102a gegen deren Ringstufenfläche 102b, 102b' anliegende Stützring 101 unter begrenzter Verformung des Ringsteges 102c radial elastisch verschiebbar gelagert. Die für den Kolbenführungsring 102 und den Stützring 101 verwendeten Materialien entsprechen den bereits bei den vorgenannten Ausführungsformen angegebenen Werkstoffen.

Der Kolbenführungsring 102 weist in seiner von der Ringnut 102a abgewandten axialen Stirnfläche eine im Querschnitt im wesentlichen V-förmige Nut zur Aufnahme einer Dachmanschettendichtung 107 auf.

Der Kolben 100 umfaßt zwei auf dem Endabschnitt der Kolbenstange 106 angeordnete Kolbensegmente 108, 109, die durch ein Befestigungselement 113 an der Kolbenstange 106 festgelegt sind und dabei zwischen sich einen Zwischenring 112 im Klemmsitz festlegen. Die Außendurchmesser der Kolbensegmente 108, 109 und des Zwischenringes 112 sind soviel kleiner bemessen als der Innendurchmesser des Zylinders 105, daß die Kolbensegmente 108, 109 und der Zwischenring 112 auch bei den kleinen radialen Auslenkungen des Kolbens im Betrieb nicht mit der Innenfläche des Zylinders 105 in Berührung kommen können.

Zwischen einem jeden Kolbensegment 108 bzw. 109 und dem Zwischenring 112 ist eine Hochdruckdichtung so angeordnet, daß der Stützring 101 am Zwischenring 112 anliegt und die Hochdruckdichtungen beim Anziehen des Befestigungselementes 113 durch Bewegung der Kolbensegmente 108, 109 aufeinanderzu von entgegengesetzten Seiten her gegen den Zwischenring 112 gepreßt und dabei leicht komprimiert und vorgespannt werden. Die Hochdruckdichtungen weisen dabei in entgegengesetzte Richtungen.

Die Kolbenstange 106 ist über eine Kupplung 110 entweder mit einem Kreuzkopf eines herkömmlichen Kurbeltriebes gekoppelt oder wird zur axialen Kraftübertragung benutzt. Im ersten Fall wird durch die reziprozierende Bewegung des Kolbens 100 und die entsprechende Volumenänderung der Zylinderkammern 111 bzw. 123 ein Druck P auf die darin befindlichen, z. B. zu fördernden Flüssigkeiten erzeugt; im zweiten Fall wird z. B. durch Einführen eines Hydraulikmediums in die Zylinderkammern 111 bzw. 123 ein Druck auf den Kolben 100 ausgeübt, der mittels der Kolbenstange 106 auf eine zu betätigende Vorrichtung übertragen wird.

Unter dem Betriebsdruck in den Zylinderkammern 111 bzw. 123, der über die Dachmanschettendichtung 107 auf den Kolbenführungsring 102 und den Stützring 101 einwirkt, verformt sich der Kolbenführungsring 102 und bettet den Stützring 101 radial verschiebbar ein. Ein Extrudieren des Kolbenführungsringes 102 in den Raum zwischen der Innenwand des Zylinders 105 und dem Zwischenring 112 ist wegen der starken Pressung des Stützringes 101 gegen diesen sowie wegen des nur minimalen Ringspaltes 103 ausgeschlossen. Fertigungs- und einbaubedingte Fluchtungsfehler zwischen der Innenwand des Zylinders 105 und dem Stützring 101 werden durch radiale Verschiebung des Stützringes 101 ausgeglichen, die besonders dann erleichtert ist, wenn wie in Fig. 3b ein Radialspiel 104 zwischen dem Ringsteg 102c des Kolbenführungsringes 102 und dem Stützring 101 vorgesehen ist.

Fig. 4 zeigt eine abgewandelte Hochdruckdichtung der bereits an Hand der Fig. 3 beschriebenen Art, bei der ein verformbarer Kolbenführungsring 120 in die Außenumfangsfläche des Zwischenringes eingelassen ist. Zwischen den Kolbensegmenten sind, analog der Ausführungsform in Fig. 3, Dichtungsringe 119 und in deren Ringnut angeordnete Stützringe 101 vorgesehen. Die Dichtungsringe 119 weisen radiale Dichtlippen auf, die die Funktion der Dachmanschettendichtungen 107 in Fig. 3 erfüllen. Da in dem vom Zwischenring, der Innenwand des Zylinders und den Stützringen 101 eingeschlossenen Raum der Betriebsdruck P nicht auftritt, muß der Kolbenführungsring 120 keine besondere Abstützung aufweisen, sondern kann einfach in die Außenumfangsfläche des Zwischenringes eingelassen sein. Die Funktionen des Kolbens in Fig. 4 entspricht ansonsten ganz der des Kolbens 100 in Fig. 3.

Mit einer Plungerkolbenpumpe ähnlich der an Hand von Fig. 1 beschriebenen Art wurden Vergleichsversuche durchgeführt, bei denen zum einen eine Hochdruckdichtung der eingangs genannten bekannten Art, andererseits eine erfindungsgemäße Hochdruckdichtung verwendet wurden.

Die Dachmanschettendichtung bestand bei beiden Versuchen aus vier PTFE-getränkten Asbest-Gewebemanschetten, der Plungerkolben wies eine Lauffläche mit einer im Schmelzverfahren aufgebrachten Chromkarbid-Schicht MK22 auf. Für die Hochdruckdichtung der bekannten Art wurde ein starr gelagerter Stützring aus AB 4 S-Bronze verwendet, in den als Führungsring ein Band aus gefülltem PTFE (Compound Nr. 10 der Firma Busak & Luyken) eingelagert war. Für die erfindungsgemäße Hochdruckdichtung wurde ein Stützring aus Sintermetall mit Notlaufeigenschaften (DEVA-Metall) verwendet; der Führungsring bestand, wie bei der bekannten Dichtung, aus gefülltem PTFE (compound Nr. 10 der Firma Busak & Luyken).

Die Laufzeit bis zur Leckage betrug bei der bekannten Hochdruckdichtung etwa 50 Stunden. Die Leckage war zurückzuführen auf durch radial angelaufenen Kolben verschlissenen Stützring und daraufhin zusammengebrochene Dachmanschetten.

Die erfindungsgemäße Hochdruckdichtung lief nach 240 Stunden immer noch mit einwandfreien Dachmanschetten und unbeschädigtem Führungsring; der Versuch wurde nach dieser Laufdauer abgebrochen.

Der Stützring zeigte nach 240 Stunden leichte, auf der gesamten Innenumfangsfläche gleichmäßig verteilte Tuschierspuren, die wahrscheinlich darauf zurückzuführen sind, daß der Stützring während des Druckhubes radial komprimiert und durch die härtere Plungerkolben-Oberfläche kalibriert worden ist. Diese Annahme wird dadurch gestützt, daß der Innendurchmesser des Stützringes um etwa 0,01 mm vergrößert wurde.

Neben der hier beschriebenen vorteilhaften Kombination eines Stützringes aus Metall mit Notlaufeigenschaften und eines Plungerkolbens mit demgegenüber sehr viel härterer Oberfläche ist es natürlich ebenfalls möglich, den Stützring aus Werkstoffen zu fertigen, die so hart wie oder härter als die Plungerkolben-Oberfläche sind oder deren Innenumfangsfläche zumindest eine entsprechend harte Schicht aufweist.

**Patentansprüche**

1. Hochdruckdichtung für einen axial verschiebaren und/oder verdrehbaren Kolben, eine Kolbenstange oder Welle, mit mindestens einem Dichtungs- oder Führungsring (2, 14, 19, 102, 119) aus unter Druck elastisch oder plastisch verformbarem Material und einem an diesem anliegenden Stützring (1, 101), der aus sich unter den Betriebsbedingungen im wesentlichen nicht verformendem Hartmaterial besteht,
dadurch gekennzeichnet, daß

a) der Dichtungs- oder Führungsring (2, 14, 19, 102, 119) an seinem mit dem Stützring (1, 101) zusammenwirkenden Ende eine zu diesem und zum abzudichtenden Ringspalt (3, 103) hin offene Ringnut (2a, 102a) mit einer im wesentlichen radialen Ringstufenfläche (2b, 102b) und einem diese auf der vom Ringspalt (3, 103) abgewandten Seite begrenzenden, axial vorstehenden Ringsteg (2c, 102c) aufweist,

b) dem Ringspalt (3, 103) zugewandte Umfangsfläche (1a, 101a) des Stützringes relativ zu der vom Ringsteg (2c, 102c) entfernteren Umfangsfläche (2d, 102d) des Dichtungs- oder Führungsringes (2, 14, 19, 102, 119) bei koaxialer Ausrichtung etwas zurücktritt,

c) die dem Ringspalt (3, 103) zugewandte Umfangsfläche (2b', 102b') des Ringsteges (2c, 102c) im Durchmesser der vom Ringspalt (3, 103) abgewandten Umfangsfläche (1b, 101b) des Stützringes (1, 101) entspricht oder vor dem Einbau um eine vorbestimmte geringe Strecke größer ist, jedoch im Betriebszustand unter elastischer und/oder plastischer Verformung gegen diese anliegt und

d) der in der Ringnut (2a, 102a) gegen deren Ringstufenfläche (2b, 2b', 102b, 102b') anliegende Stützring (1, 101) unter begrenzter Verformung des Ringsteges (2c, 102c) radial elastisch verschiebbar gelagert ist.

2. Dichtung nach Anspruch 1, dadurch gekennzeichnet, daß der Dichtungs- oder Führungsring (2, 14, 102) in seiner von der Ringnut (2a, 102a) abgewandten axialen Stirnfläche eine im Querschnitt im wesentlichen V-förmige Nut zur Aufnahme einer Dachmanschettendichtung (7, 107) aufweist.

3. Dichtung nach Anspruch 1, dadurch gekennzeichnet, daß der Dichtungs- oder Führungsring (19, 119) an seiner von der Ringnut (2a, 102a) abgewandten axialen Stirnfläche wenigstens eine radiale Dichtlippe aufweist.

4. Dichtung nach einem der Ansprüche 1 bis 3, dadurch gekennzeichnet, daß der Stützring (1, 101) aus Metall und/oder Oxidkeramik besteht.

5. Dichtungs- oder Führungsring aus unter Druck verformbarem Material für eine Hochdruckdichtung nach Anspruch 1, dadurch gekennzeichnet, daß dieser

a) eine axial und zum abzudichtenden Ringspalt (3, 103) hin offene Ringnut (2a, 102a) mit einer im wesentlichen radialen Ringstufenfläche (2b, 102b) sowie einen diese auf der vom abzudichtenden Ringspalt abgewandten Seite begrenzenden, axial vorstehenden Ringsteg (2c, 102c) aufweist und

b) die der Ringnut zugewandte Umfangsfläche (2b', 102b') des Ringsteges im Durchmesser der diesem zugewandten Umfangsfläche des aufzunehmenden Stützringe (1, 101) entspricht oder um eine vorbestimmte geringe Strecke größer ist.

## Claims

1. A high-pressure seal for an axially-sliding and/or rotating piston, piston-rod or shaft, with at least one sealing or guiding ring of a material which is elastically or plastically deformable under pressure and, resting against this, a support-ring of a hard material which is substantially undeformable under the operating conditions encountered, underlined characterised in that:

a) the sealing or guiding ring (2, 14, 19, 102, 119), at its end where it rests against the support-ring (1, 101), has an annular groove (2a, 102a), which is open towards the support-ring (1, 101) and towards the annular gap (3, 103) which is to be sealed, the annular groove (2a, 102a) having a substantially radial surface (2b, 102b) and an annular step (2c, 102c) projecting axially at the side of the groove (2a, 102a) opposite the annular gap (3, 103), and in that:

b) the surface (1a, 101a) of the support-ring (1, 101) at the annular gap (3, 103) is radially set back a little from the runnig surface (2d, 102d) of the sealing or guiding ring (2, 14, 19, 102, 119), these two surfaces nevertheless being parallel to each other, and in that:

c) the diameter of the annular surface (2b', 102b'), opposite the annular gap (3, 103) of the step (2c, 102c), is the same as the diameter of the neighbouring annular surface (1b, 101b) of the support-ring (1, 101), or is slightly greater before assembly of the seal but decreases during operation by elastic or plastic deformation so that these two surface rest in contact with each other, and in that:

d) the support-ring (1, 101), which rests in the annular groove (2a, 102a) in contact with the radial (2b, 102b) and axial (2b', 102b') surfaces of the groove (2a, 102a), is radially elastically shiftable by the limited deformation of the step (2c, 102c).

2. High-pressure seal as claimed in Claim 1, characterised in that the sealing or guiding ring (2 14, 102) has a groove, substantially V-shaped in cross section, in its end away from the annular groove (2a, 102a), for taking a V-section lip-seal (7, 107).

3. High-pressure seal as claimed in Claim 1, characterised in that the axial face of the sealing or guiding ring (19, 119) away from the annular groove (2a, 102a) has at least one radial sealing lip.

4. High-pressure seal as claimed in Claims 1 to 3, characterised in that the supportring (1, 101) is made of metal and/or a ceramic oxide.

5. A sealing or guiding ring of a material which is deformable under pressure, for a high-pressure seal of the kind claimed in Claim 1, characterised in that the base ring has:

a) an annular groove (2a, 102a) which is open towards the annular gap (3, 103) which is to be sealed, the annular groove (2a, 102a) having a substantially radial surface (2b, 102b) and an annular step (2c, 102c) projecting axially at the side of the groove (2a, 102a) opposite the annular gap (3, 103), and in that:

b) the diameter of the annular surface (2b', 102b'), opposite the annular gap, of the step is the same as the diameter of the neighbouring annular surface of the supportring (1, 101), or is slightly greater.

## Revendications

1. Joint d'étanchéité haute pression pour un piston susceptible de coulisser axialement et/ou de tourner, pour une tige de piston ou pour un arbre, ce joint comportant au moins un anneau d'étanchéité ou de guidage (2, 14, 19, 102, 119) réalisé en un matériau déformable élastiquement ou plastiquement et une bague d'appui (1, 101) qui s'applique sur l'anneau et qui est réalisée en un matériau dur ne se déformant en principe pas dans les conditions où il est exploité, joint d'étanchéité caractérisé en ce que:

a) l'anneau d'étanchéité ou de guidage (2, 14, 19, 102, 119) comporte, à son extrémité coopérant avec la bague d'appui (1, 101), une gorge annulaire (2a, 102a), ouverte vers cette bague et vers l'intervalle annulaire (3, 103) à étancher, cette gorge étant délimitée par une surface en gradin annulaire (2b, 102b), essentiellement radiale, et par une nervure annulaire (2c, 102c) faisant saillie axialement et délimitant cette gorge sur le côté opposé à l'intervalle annulaire (3, 103),

b) la surface périphérique (1a, 101a), de la bague d'appui (1, 101) à étancher située en regard de l'intervalle annulaire (3, 103), est quelque peu en retrait par rapport à la surface périphérique (2d, 102d), la plus éloignée de la nervure annulaire (2c, 102c), de l'anneau d'étanchéité ou de guidage (2, 14, 19, 102, 119), cette surface périphérique étant orientée coaxialement par rapport à cette surface,

c) la surface périphérique (2b', 102b'), tournée vers l'intervalle annulaire (3, 103), de la nervure annulaire (2c, 102c) correspond en diamètre à celui de la surface périphérique (1b, 101b) de la bague d'appui (1, 101), qui est opposée à l'intervalle annulaire (3, 103), ou bien lui est supérieure, avant montage, d'une quantité réduite prédéterminée, mais s'applique cependant contre elle en état de fonctionnement, par déformation élastique et/ou plastique,

d) la bague d'appui (1, 101), s'appliquant dans la gorge annulaire (2a, 102a) contre la surface en gradin annulaire (2b, 2b', 102b, 102b') de cette gorge, est montée de façon à pouvoir se déplacer élastiquement dans le sens radial en déformant, de façon limitée la nervure annulaire (2c, 102c).

2. Joint d'étanchéité selon la revendication 1, caractérisé en ce que l'anneau d'étanchéité ou de guidage (2, 14, 102) comporte, sur sa face frontale opposée axialement à la gorge annulaire (2a, 102a) une gorge de section transversale essentiellement en forme de V, destinée à recevoir une garniture d'étanchéité en forme de toit (7, 107).

3. Joint d'étanchéité selon la revendication 1, caractérisé en ce que l'anneau d'étanchéite ou de guidage (19, 119) comporte, sur sa face frontale opposée axialement à la gorge annulaire (2a, 102a), au moins une lèvre radiale d'étanchement.

4. Joint d'étanchéité selon une des revendications 1 à 3, caractérisé en ce que la bague d'appui (1, 101) est en métal ou en céramique oxydée.

5. Anneau d'étanchéité ou de guidage en un matériau déformable sous pression, destiné à un joint d'étanchéité haute pression selon la revendication 1, caractérisé en ce que:

a) il comporte une gorge annulaire (2a, 102a), ouverte axialement vers l'intervalle annulaire à étancher (3, 103), avec une surface en gradin annulaire (2b, 102b) essentiellement radiale, ainsi qu'avec une nervure annulaire (2c, 102c) faisant saillie axialement et délimitant cette gorge sur son côté opposé à l'intervalle à étancher,

b) la surface périphérique (2b' 102b'), tournée vers la gorge annulaire, de la nervure annulaire, correspond en diamètre à la surface, tournée vers elle, de la bague d'appui (1, 101) à recevoir, ou bien lui est supérieure d'une faible quantité prédéterminée.

FIG. 1a + 1b

FIG. 1

EP 0 156 136 B1

FIG.1a

FIG.1b

EP 0 156 136 B1

19  1  21  20  22  10

p

6

FIG. 2

EP 0 156 136 B1

FIG. 3

FIG.3b

FIG.3a

9

FIG. 4